# EUROPÄISCHE PATENTSCHRIFT

(11) **EP 3 642 523 B1**
(45) Veröffentlichungstag und Bekanntmachung des Hinweises auf die Patenterteilung: **27.12.2023**
(21) Anmeldenummer: 18732050.2
(22) Anmeldetag: 15.06.2018
(51) Int. Cl.: F16L 17/03, F16L 17/04, F16L 21/00

(54) **DICHTUNGSMANSCHETTE FÜR EINE ROHRSCHELLE UND ROHRSCHELLE MIT EINER DERARTIGEN DICHTUNGSMANSCHETTE**
SEALING SLEEVE FOR A PIPE CLAMP AND PIPE CLAMP HAVING SUCH A SEALING SLEEVE
MANCHON D'ÉTANCHÉITÉ POUR UN COLLIER DE SERRAGE ET COLLIER DE SERRAGE COMPRENANT UN MANCHON D'ÉTANCHÉITÉ DE CE TYPE

(30) Priorität: 21.06.2017 DE 102017113789
(43) Veröffentlichungstag der Anmeldung: 29.04.2020
(73) Patentinhaber: NORMA Germany GmbH, 63477 Maintal (DE)
(72) Erfinder: KRÄMER, Markus, 63533 Mainhausen (DE); LANTSMANN, Natan, 36039 Fulda (DE)
(74) Vertreter: Patentanwälte Olbricht Buchhold Keulertz
(86) Internationale Anmeldenummer: PCT/EP2018/065944
(87) Internationale Veröffentlichungsnummer: WO 2018/234178

(56) Entgegenhaltungen:
- EP-A2- 0 656 502
- WO-A1-88/07644
- WO-A1-97/43571
- WO-A2-2009/045525
- GB-A- 2 211 255
- US-A- 1 930 194

## Beschreibung

Die Erfindung betrifft eine ringförmige Dichtungsmanschette für eine Rohrschelle, wobei die Dichtungsmanschette an einer Innenseite eine erste Dichtlippe mit einer ersten Querschnittsgeometrie und eine zweite Dichtlippe mit einer zweiten Querschnittsgeometrie aufweist. Ferner betrifft die Erfindung eine Rohrschelle mit einer derartigen Dichtungsmanschette.

Rohrschellen finden beispielsweise in Form von Rohrkupplungen als kompaktes und zuverlässiges Mittel zur Verbindung glattendiger Rohre ihren Einsatz. Dabei können mit den Rohrschellen Kunststoff- und Metallrohre, aber insbesondere auch Edelstahlrohre oder Rohre aus Materialien wie Glas, Steinzeug oder Beton miteinander verbunden werden. In Verbindung mit einer Dichtungsmanschette wird dabei eine fluiddichte Verbindung erreicht, sodass mithilfe der über Rohrschellen verbundenen Rohre druckdichte Leitungen für feste, flüssige oder gasförmige Medien hergestellt werden können.

Um auch bei höheren Drücken eine zuverlässige Abdichtung zu erreichen, ist es bekannt, eine Dichtungsmanschette an ihrer Innenseite mit zwei benachbarten Dichtlippen je Endbereich zu versehen. Diese beiden Dichtlippen sorgen sozusagen für eine doppelte Sicherheit und bewirken sowohl bei niedrigen als bei hohen Betriebsdrücken eine gute Dichtwirkung. Beim Spannen der Rohrschelle drücken sich dabei die Dichtlippen auch aufeinander, wobei durch eine entsprechende Geometrie an einer axialen Innenseite dafür gesorgt werden kann, dass mit zunehmendem Druck innerhalb des Rohres, der auch auf die Dichtlippen wirkt, auch die Dichtwirkung weiter zunimmt.

Die bekannten Lösungen arbeiten an sich zufriedenstellend. Allerdings hat sich herausgestellt, dass insbesondere bei rauen Oberflächen der zu verbindenden Rohre Undichtigkeiten auftreten können. Ferner kann es auch bei sehr hohen Innendrücken zu Problemen kommen.

Aus WO 2009/045525 A2 und GB 2 211 255 A ist jeweils eine Dichtmanschette mit zwei gegenüberliegenden Hauptdichtlippen bekannt, die nach Innen weisend und in Gänze federnd an einem Mantel gelagert sind. Die Hauptdichtlippen haben auf der Außenseite jeweils mehrere kleine Stufen bzw. Erhebungen. Beim Verformen der Hauptdichtlippe auf einem Rohrmantel ändert sich deren Winkel zum Rohrmantel und die Stufen bzw. Erhebungen treten nach und nach mit dem Rohrmantel in Kontakt.

Von WO 97/43571 A1 und EP 0 656 502 A2 ist jeweils eine Dichtungsmanschette beschrieben, bei der zwei Dichtlippen unterschiedlicher Geometrie benachbart zueinander angeordnet sind. Hierdurch deformieren die Dichtlippen beim Spannen einer mit der Dichtungsmanschette ausgestatteten Rohrschelle recht unabhängig voneinander.

WO 88/07644 A1 gibt eine Dichtungsmanschette mit einem nach Innen weisenden Federschenkel an, der eine erste Dichtlippe ausbildet. Weiter außen sind zusätzlich mehreren benachbart zueinander angeordnete weitere Dichtlippen gleichen Querschnitts vorgesehen, die nicht auf dem Federschenkel sitzen.

Der Erfindung liegt nun die Aufgabe zugrunde, eine Dichtungsmanschette für eine Rohrschelle und eine Rohrschelle bereitzustellen, die sowohl bei hohen als auch bei niedrigen Drücken eine hohe Dichtigkeit ermöglicht.

Diese Aufgabe wird durch eine Dichtungsmanschette mit den Merkmalen des Anspruchs 1 sowie eine Rohrschelle mit den Merkmalen des Anspruchs 13 gelöst. Vorteilhafte Ausgestaltungen finden sich in den Unteransprüchen.

Bei einer ringförmigen Dichtungsmanschette für eine Rohrschelle, wobei die Dichtungsmanschette an einer Innenseite in zumindest einem axialen Endbereich eine erste Dichtlippe mit einer ersten Querschnittsgeometrie und eine zweite Dichtlippe mit einer zweiten Querschnittsgeometrie aufweist, wobei die erste Querschnittsgeometrie und die zweite Querschnittsgeometrie unterschiedlich sind, wobei die erste Dichtlippe in axialer Richtung eine größere Erstreckung als in radialer Richtung aufweist und die zweite Dichtlippe in axialer Richtung eine gleiche oder geringere Erstreckung als in radialer Richtung aufweist, wobei die zweite Querschnittsgeometrie sich in radialer Richtung verjüngend, nämlich teilkreisförmig oder pyramidenförmig mit abgerundetem oder spitzen Kopfbereich ausgebildet ist, wodurch die zweite Dichtlippe wie ein O-Ring wirkt, ist erfindungsgemäß vorgesehen, dass die erste Dichtlippe aufgrund ihrer Querschnittsgeometrie steifer als die zweite Dichtlippe ist.

Die Richtungsangaben axial bzw. radial beziehen sich dabei auf die Form der ringförmigen Dichtungsmanschette bzw. der damit verbundenen Rohre. Durch die entsprechende Ausgestaltung der unterschiedlichen Querschnittsgeometrien ergeben sich für die erste Dichtlippe und die zweite Dichtlippe unterschiedliche Eigenschaften. So ist die erste Dichtlippe aufgrund ihrer Querschnittsgeometrie steifer als die zweite Dichtlippe. Die erste Dichtlippe, die in axialer Richtung eine größere Erstreckung als in radialer Richtung aufweist, liegt an einer Oberfläche des Rohres relativ flächig an, bewirkt also eine großflächige Abdichtung mit relativ geringem Druck. Die zweite Dichtlippe liegt hingegen wie ein O-Ring nur über eine relativ kleine Kontaktfläche an der Oberfläche des Rohres und damit mit entsprechend hohem Druck an. Dabei lässt sich die zweite Dichtlippe einfacher verformen und kann sich somit gut an rauere Oberflächen anpassen. Durch die unterschiedlichen Querschnittsgeometrien der ersten und zweiten Dichtlippe wird so im Endbereich der Dichtungsmanschette eine sehr zuverlässige Abdichtung erreicht.

Dabei ist besonders bevorzugt, dass die erste Dichtlippe von der zweiten Dichtlippe weg in axialer Richtung nach innen geneigt ist. Die ersten Dichtlippen sind so in Richtung eines Spalts zwischen zwei miteinander verbundenen Rohren geneigt. Durch diese Neigung axial nach innen wird die erste Dichtlippe mit steigendem Druck innerhalb des Rohres immer stärker an die Oberfläche des Rohres angedrückt, sodass mit steigendem Druck auch eine weiter verbesserte Abdichtung erhalten wird.

Dabei ist insbesondere vorgesehen, dass die zweite Dichtlippe axial weiter außen angeordnet ist als die erste Dichtlippe. Die erste Dichtlippe ist somit direkt einem innerhalb des Rohres herrschenden Druck ausgesetzt und stellt somit die erste Dichtstufe dar, während die zweite Dichtlippe als zusätzliche Absicherung dient, selbst aber so einem verringerten Druck statthalten muss.

In einer bevorzugten Ausgestaltung sind benachbart zur zweiten Dichtlippe weitere Dichtlippen mit gleicher Querschnittsgeometrie wie die zweite Dichtlippe angeordnet. Die weiteren Dichtlippen und die zweite Dichtlippe können so relativ dünn ausgebildet und dementsprechend elastisch sein, wobei durch die Mehrzahl an Dichtlippen eine mehrfache Abdichtung erhalten wird. Die Dichtlippen können sich dabei gut an eine raue Oberfläche anpassen und so auch dann eine sichere Abdichtung gewährleisten. Durch die weiteren Dichtlippen erhöht sich also die Zuverlässigkeit der erreichbaren Abdichtung weiter.

Die zweite Querschnittsgeometrie ist teilkreisförmig oder pyramidenförmig mit abgerundetem oder spitzen Kopfbereich ausgebildet. Die zweiten Dichtlippen wirken damit wie O-Ringe und können sich gut an eine Oberfläche des Rohres anschmiegen. Gleichzeitig sind sie in der Lage, in radialer Richtung ausreichende Dichtkräfte aufzubauen, wohingegen sie in axialer Richtung relativ elastisch sind.

Bevorzugterweise ist die Dichtungsmanschette symmetrisch aufgebaut, wobei an jedem axialen Endbereich eine Kombination von einer ersten Dichtlippe und einer zweiten Dichtlippe sowie gegebenenfalls weiterer Dichtlippen angeordnet ist. Dies ist insbesondere für Rohrschellen relevant, die als Rohrkupplungen zum Verbinden zweier Rohrenden eingesetzt werden. Somit ist jedem Rohrende eine Kombination von erster Dichtlippe und zweiter Dichtlippe sowie gegebenenfalls weiterer Dichtlippen zugeordnet und es wird eine sichere Abdichtung erhalten. Dabei ist vorzugsweise vorgesehen, dass die ersten Dichtlippen axial weiter innen liegen als die zweiten Dichtlippen und gegebenenfalls weiteren Dichtlippen. Die ersten Dichtlippen, die aufgrund ihrer Querschnittsgeometrie steifer sind als die zweite Dichtlippe und die weiteren Dichtlippen wirken somit als erste Abdichtung, die vom Rohrinnendruck beaufschlagt wird. Die zweiten Dichtlippen und weiteren Dichtlippen bewirken dann eine weitere nachgeschaltete Abdichtung.

In einer bevorzugten Ausgestaltung erstrecken sich die axial weiter außen angeordneten weiteren Dichtlippen weniger weit radial nach innen als die ersten Dichtlippen. Beim Spannen der Rohrschelle legt sich somit zuerst die erste Dichtlippe an die Oberfläche des Rohres an und anschließend die zweite Dichtlippe und dann die weiteren Dichtlippen. Somit wird gewährleistet, dass beim Spannen der Rohrschelle vor allem die erste Dichtlippe mit ausreichendem Anpressdruck an die Rohroberfläche angedrückt wird, um eine ausreichende Dichtwirkung zu erzielen. Durch weiteres Spannen der Rohrschelle wird die Dichtungsmanschette dann derartig verformt, dass sich auch die anderen Dichtlippen an die Oberfläche des Rohres anlegen und eine zusätzliche Abdichtung erzielen. Die erste Dichtlippe und die zweite Dichtlippe liegen dann aber mit besonders hoher Kraft der Rohroberfläche an und bewirken eine sehr hohe Abdichtung.

Dafür ist insbesondere vorgesehen, dass sich die erste Dichtlippe und die zweite Dichtlippe radial weiter nach innen erstrecken als zumindest eine der weiteren Dichtlippen. Insbesondere erstrecken sich die erste Dichtlippe und die zweite Dichtlippe dabei sogar gleich weit radial nach innen, kommen also gleichzeitig in Kontakt mit der Oberfläche des Rohres, sodass immer eine doppelte Abdichtung gewährleistet ist.

In einer vorteilhaften Ausgestaltung weist die Dichtungsmanschette zwischen den ersten Dichtlippen einen mittleren Bereich mit konstanter Materialdicke auf, wobei das Dichtungselement in diesem Bereich dünner ist als im Bereich der Dichtlippen. Der mittlere Bereich dient im Wesentlichen dazu, die Bereiche mit den Dichtlippen miteinander zu verbinden und gegebenenfalls einen Spalt zwischen den Rohrenden zu überbrücken. Indem dieser Bereich dünner ausgebildet ist als der Bereich mit den Dichtlippen, ergibt sich eine Materialeinsparung. Dies führt so zu einem geringen Gewicht als auch zu geringen Herstellungskosten. Darüber hinaus ermöglicht die geringere Materialdicke, beispielsweise eine Bandeinlage an der radialen Innenseite im mittleren Bereich der Dichtungsmanschette anzuordnen. Diese kann dann z.B. als Versteifung und als Schutz vor mechanischer Belastung dienen. Außerdem kann die Bandeinlage bei Vakuumanwendungen einem Einziehen der elastischen Dichtmanschette in den Spalt zwischen den miteinander verbundenen Rohren entgegenwirken.

Vorzugsweise ist eine radiale Außenseite der Dichtungsmanschette glatt ausgebildet. Die Dichtungsmanschette kann mit ihrer Außenseite damit vollflächig an einer Innenseite der Rohrschelle anliegen. Eine Außenkontur der Dichtungsmanschette entspricht somit einer Innenkontur der Rohrschelle.

Vorteilhafterweise verjüngen sich axiale Außenkanten der Dichtungsmanschette in radialer Richtung. Die Außenkanten der Dichtungsmanschette können so beispielsweise unter umgebogene Kanten der Rohrschelle greifen, sodass die Dichtungsmanschette formschlüssig innerhalb der Rohrschelle gesichert wird. Ferner wird durch die Verjüngung eine gewisse Elastizität erreicht, was dazu führt, dass sich die axial äußeren Dichtlippen etwas leichter verformen lassen. Dabei kann durch den Winkel der Verjüngung eine Neigung optionaler Metallstreifen vorgegeben werden, die als Verankerungsringe dienen und eine Axialsicherung zweier miteinander verbundener Rohre bewirken.

Die eingangs genannte Aufgabe wird auch durch eine Rohrschelle mit einer derartigen Dichtungsmanschette gelöst, wobei erfindungsgemäß vorgesehen ist, dass die Dichtungsmanschette an einer Innenseite der Rohrschelle angeordnet ist. Mit einer derartigen Rohrschelle lassen sich glatte Rohrenden zuverlässig und fluiddicht miteinander verbinden. Ferner kann eine derartige Rohrschelle als Reparaturschelle eingesetzt werden, indem sie eine Leckagestelle überdeckt.

Vorzugsweise weist die Rohrschelle an der Innenseite mindestens einen mit radial nach innen ragenden Zähnen versehenen Metallstreifen auf, wobei insbesondere an beiden axialen Enden der Rohrschelle je ein derartiger Metallstreifen vorgesehen ist. Dieser Metallstreifen mit den nach innen ragenden Zähnen kann auch als Verankerungsring bezeichnet werden und bewirkt eine Axialsicherung der Rohrenden zueinander. Somit kann die Rohrschelle auch eine zugfeste Verbindung realisieren. Ohne derartige Metallstreifen würde die Rohrschelle nur eine reine Rohrkupplung mit dichtender Funktion darstellen, wobei eine Axialsicherung über ein zusätzliches Element realisiert werden müsste.

Ferner kann auf einer Innenseite der Dichtungsmanschette eine Bandeinlage vorgesehen sein. Die Bandeinlage erstreckt sich nur im mittleren Bereich, also nur zwischen den jeweils in axialen Endbereichen ausgebildeten Dichtlippen. Sie schützt die Innenseite der Dichtungsmanschette.

Die Erfindung wird im Folgenden anhand eines bevorzugten Ausführungsbeispiels in Verbindung mit den Zeichnungen näher beschrieben. Hierin zeigen:

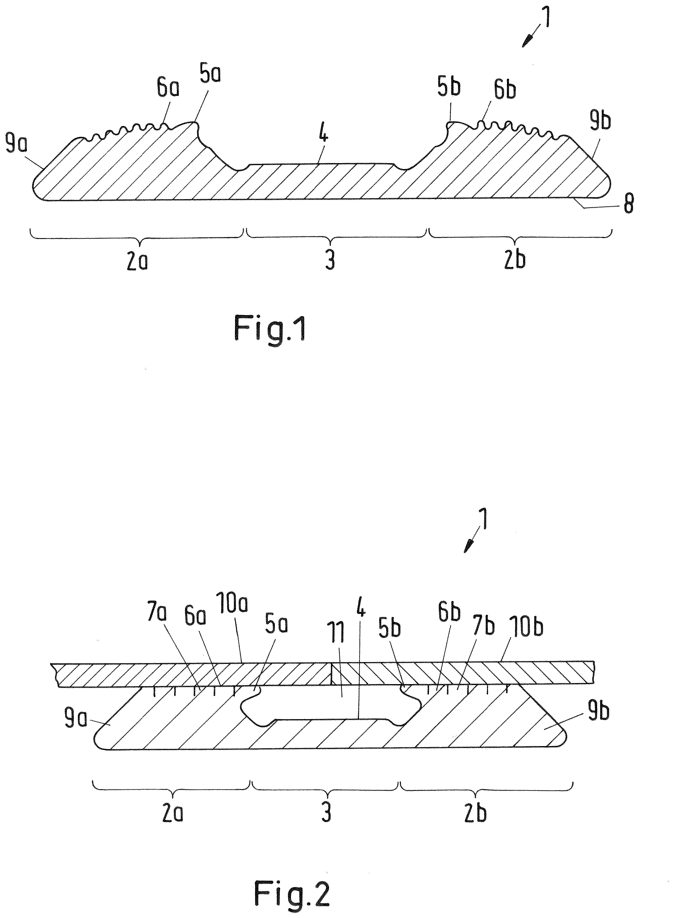

In Figur 1 ist im Querschnitt eine Dichtungsmanschette 1 für eine Rohrschelle dargestellt, die symmetrisch ausgebildet ist, also spiegelbildlich aufgebaute axiale Endbereiche 2a, 2b aufweist, zwischen denen ein mittlerer Bereich 3 mit verringerter Materialdicke ausgebildet ist. An einer Innenseite 4 der Dichtungsmanschette 1 sind in jedem der Endbereiche 2a, 2b je eine erste Dichtlippen 5a, 5b und zweite Dichtlippen 6a, 6b ausgebildet. Die zweiten Dichtlippen 6a, 6b befinden sich dabei in axialer Richtung weiter außen als die ersten Dichtlippen 5a, 5b. Benachbart zu den zweiten Dichtlippen 6a, 6b sind in axialer Richtung weiter nach außen weitere Dichtlippen 7a, 7b angeordnet.

Die ersten Dichtlippen 5a, 5b weisen eine erste Querschnittsgeometrie auf und erstrecken sich in axialer Richtung weiter als in radialer Richtung. Dabei sind sie von der zweiten Dichtlippe 6a, 6b jeweils weggeneigt, also in axialer Richtung nach innen. Die zweiten Dichtlippen 6a, 6b sowie die weiteren Dichtlippen 7a, 7b weisen eine zweite Querschnittsgeometrie auf und erstrecken sich in radialer Richtung weiter oder genauso weit wie in axialer Richtung. Die zweiten
- Figur 1: einen Querschnitt durch eine Dichtungsmanschette im unbelasteten Zustand und
- Figur 2: einen Querschnitt durch eine Dichtungsmanschette im belasteten Zustand.
Dichtlippen 6a, 6b und die weiteren Dichtlippen 7a, 7b sind also wenig oder kaum geneigt und in axialer Richtung flexibler als die erste Dichtlippen 5a, 5b.

Die zweiten Dichtlippen 6a, 6b und weiteren Dichtlippen 7a, 7b weisen im Wesentlichen einen teilkreisförmigen Querschnitt auf und wirken dementsprechend ähnliche wie O-Ringe. Dabei erstrecken sich die axial weiter außen liegenden weiteren Dichtlippen 7a, 7b weniger weit in radialer Richtung als die erste Dichtlippe 5a, 5b und die zweite Dichtlippe 6a, 6b. Beim Spannen der Dichtungsmanschette 1 mit einer Rohrschelle um glatte Rohrenden legen sich also zunächst die ersten Dichtlippen 5a, 5b und die zweiten Dichtlippen 6a, 6b an eine Oberfläche der Rohre an und anschließend die weiteren Dichtlippen 7a, 7b. Die ersten Dichtlippen 5a, 5b und die zweiten Dichtlippen 6a, 6b werden dementsprechend mit relativ großer Kontaktkraft an die Oberfläche der Rohre angedrückt und bewirken so eine besonders gute Abdichtung.

Eine radiale Außenseite 8 der Dichtungsmanschette 1 ist glatt ausgebildet. Die Dichtungsmanschette 1 weist also außen eine glatte Zylinderform auf. Dabei verjüngt sich die Dichtungsmanschette 1 innenseitig an ihren axialen äußeren Kanten 9a, 9b und kann so beispielsweise einen nach innen ragenden Metallstreifen der Rohrschelle untergreifen, sodass die Dichtungsmanschette 1 formschlüssig innerhalb einer Rohrschelle gehalten werden kann.

Der mittlere Bereich 3 weist gegenüber den axialen Endbereichen 2a, 2b, in denen die Dichtlippen 5a, 5b, 6a, 6b, 7a, 7b ausgebildet sind, eine verringerte, konstante Materialstärke auf. Dieser Bereich dient im Wesentlichen dazu, einen Abstand der axialen Endbereiche 2a, 2b zueinander eindeutig zu definieren. Ferner kann durch die geringere Materialstärke zwischen den axialen Endbereichen 2a, 2b auf der Innenseite 4 eine Bandeinlage positioniert werden, die die Dichtungsmanschette 1 nach innen, also einer von der Rohrschelle abgewandten Seite, abdeckt.

In Figur 2 ist die Dichtungsmanschette 1 in einem gegenüber zwei Rohrenden 10a, 10b verspannten Zustand im Querschnitt dargestellt. Es ist zu erkennen, dass sich die Dichtlippen 5a, 5b axial und radial nach innen verformt haben. Bei einem höheren Druck innerhalb der Rohrenden 10a, 10b, der dann auch in einem Freiraum 11 radial innerhalb des mittleren Bereichs 3 herrscht, werden die ersten Dichtlippen 5a, 5b auf die Oberfläche der Rohrenden 10a, 10b gedrückt. Durch steigenden Druck erhöht sich dabei die Kraft auf die ersten Dichtlippen 5a, 5b und damit auch die Dichtwirkung.

Durch das Verspannen der Dichtungsmanschette 1 sind Freiräume, die im unbelasteten Zustand der Dichtungsmanschette 1 zwischen den zweiten Dichtlippen 6a, 6b und den weiteren Dichtlippen 7a, 7b sowie auch der ersten Dichtlippen 5a, 5b ausgebildet sind, teilweise oder vollständig verschwunden. Alle Dichtlippen 5a, 5b, 6a, 6b, 7a, 7b liegen somit unter Spannung an den Rohrenden 10a, 10b an und bewirken eine sehr gute Abdichtung. Dabei kann durch die Vielzahl der relativ elastischen Dichtlippen auch bei einer rauen Oberfläche der Rohrenden 10a, 10b eine gute Abdichtung gewährleistet werden.

Die Erfindung ist nicht auf eines der beschriebenen Ausführungsbeispiele beschränkt, sondern in vielfältiger Weise abwandelbar. So kann beispielsweise die Form der zweiten Dichtlippen und der weiteren Dichtlippen von der gezeigten, teilkreisförmigen Querschnittsform abweichen und z.B. pyramidenförmig ausgebildet sein. Auch kann gegebenenfalls eine zusätzliche Dichtlippe vorgesehen werden, die die gleiche Querschnittsgeometrie wie die erste Dichtlippe hat. Ferner ist es möglich, dass sich alle Dichtlippen radial gleich weit nach innen erstrecken.

Die erfindungsgemäße Dichtungsmanschette ermöglicht eine sichere Abdichtung auch bei rauen Oberflächen der miteinander zu verbindenden Rohrenden. Dabei sind die Dichtlippen zumindest teilweise sehr elastisch, wobei durch die Vielzahl der Dichtlippen immer eine hohe Dichtwirkung erzielt wird. In Verbindung mit einer Rohrschelle können so sehr zuverlässige Rohrkupplungen realisiert werden.

### Bezugszeichenliste

| | | | |
|---|---|---|---|
| 1 | Dichtungsmanschette | | |
| | | 7a | weitere Dichtlippen |
| 2a | axiale Endbereiche | 7b | weitere Dichtlippen |
| 2b | axiale Endbereiche | | |
| | | 8 | Außenseite |
| 3 | mittlerer Bereich | | |
| | | 9a | axiale Außenkanten |
| 4 | Innenseite | 9b | axiale Außenkanten |
| 5a | erste Dichtlippen | 10a | Rohrenden |
| 5b | erste Dichtlippen | 10b | Rohrenden |
| 6a | zweite Dichtlippen | 11 | Freiraum |
| 6b | zweite Dichtlippen | | |

## Patentansprüche

1. Ringförmige Dichtungsmanschette (1) für eine Rohrschelle, wobei die Dichtungsmanschette (1) an einer Innenseite (4) eine erste Dichtlippe (5a, 5b) mit einer ersten Querschnittsgeometrie und eine zweite Dichtlippe (6a, 6b) mit einer zweiten Querschnittsgeometrie aufweist, wobei die erste Querschnittsgeometrie und die zweite Querschnittsgeometrie unterschiedlich sind, wobei die erste Dichtlippe (5a, 5b) in axialer Richtung eine größere Erstreckung als in radialer Richtung aufweist und die zweite Dichtlippe (6a, 6b) in axialer Richtung eine gleiche oder geringere Erstreckung als in radialer Richtung aufweist, wobei die zweite Querschnittsgeometrie sich in radialer Richtung verjüngend, nämlich teilkreisförmig oder pyramidenförmig mit abgerundetem oder spitzen Kopfbereich ausgebildet ist, wodurch die zweite Dichtlippe (6a, 6b) wie ein O-Ring wirkt, **dadurch gekennzeichnet, dass** die erste Dichtlippe (5a, 5b) aufgrund ihrer Querschnittsgeometrie steifer als die zweite Dichtlippe (6a, 6b) ist.

2. Dichtungsmanschette nach Anspruch 1, **dadurch gekennzeichnet, dass** die erste Dichtlippe (5a, 5b) von der zweiten Dichtlippe (6a, 6b) weg in axialer Richtung nach innen geneigt ist.

3. Dichtungsmanschette nach Anspruch 1 oder 2, **dadurch gekennzeichnet, dass** die zweite Dichtlippe (6a, 6b) axial weiter außen angeordnet ist als die erste Dichtlippe (5a, 5b).

4. Dichtungsmanschette nach einem der vorhergehenden Ansprüche, **dadurch gekennzeichnet, dass** sie benachbart zur zweiten Dichtlippe (6a, 6b) weitere Dichtlippen (7a, 7b) mit gleicher Querschnittsgeometrie wie die zweite Dichtlippe (6a, 6b) aufweist.

5. Dichtungsmanschette nach Anspruch 4, **dadurch gekennzeichnet, dass** die zweite Dichtlippe (6a, 6b) und die weiteren Dichtlippen (7a, 7b) wenig oder kaum geneigt und in axialer Richtung flexibler als die erste Dichtlippe (5a, 5b) sind.

6. Dichtungsmanschette nach einem der Ansprüche 4 oder 5, **dadurch gekennzeichnet, dass** sich axial weiter außen angeordnete weitere Dichtlippen (7a, 7b) weniger weit radial nach innen erstrecken als die erste Dichtlippe (5a, 5b).

7. Dichtungsmanschette nach einem der Ansprüche 4 bis 6, **dadurch gekennzeichnet, dass** sich die erste Dichtlippe (5a, 5b) und die zweite Dichtlippe (6a, 6b) radial weiter nach innen erstrecken als zumindest eine der weiteren Dichtlippen (7a, 7b).

8. Dichtungsmanschette nach einem der vorhergehenden Ansprüche, **dadurch gekennzeichnet, dass** sie symmetrisch aufgebaut ist, wobei an jedem axialen Endbereich (2a, 2b) eine Kombination von einer ersten Dichtlippe (5a, 5b) und einer zweiten Dichtlippe (6a, 6b) und gegebenenfalls weiterer Dichtlippen (7a, 7b) angeordnet ist.

9. Dichtungsmanschette nach Anspruch 8, **dadurch gekennzeichnet, dass** die ersten Dichtlippen (5a, 5b) axial weiter innen liegen als die zweiten Dichtlippen (6a, 6b) und gegebenenfalls weitere Dichtlippen (7a, 7b).

10. Dichtungsmanschette nach einem der Ansprüche 8 oder 9, **dadurch gekennzeichnet, dass** die Dichtungsmanschette (1) zwischen den ersten Dichtlippen (5a, 5b) einen mittleren Bereich (3) mit konstanter Materialdicke aufweist, wobei die Dichtungsmanschette (1) in diesem mittleren Bereich (3) dünner ist als im Bereich der Dichtlippen (5a, 5b, 6a, 6b, 7a, 7b).

11. Dichtungsmanschette nach einem der vorhergehenden Ansprüche, **dadurch gekennzeichnet, dass** eine radiale Außenseite (8) der Dichtungsmanschette (1) glatt ausgebildet ist.

12. Dichtungsmanschette nach einem der vorhergehenden Ansprüche, **dadurch gekennzeichnet, dass** sich axiale Außenkanten (9a, 9b) der Dichtungsmanschette (1) in radialer Richtung verjüngen.

13. **Rohrschelle** mit einer Dichtungsmanschette (1) nach einem der vorhergehenden Ansprüche, **dadurch gekennzeichnet, dass** die Dichtungsmanschette (1) an einer Innenseite der Rohrschelle angeordnet ist.

14. Rohrschelle nach Anspruch 13, **dadurch gekennzeichnet, dass** an der Innenseite der Rohrschelle mindestens ein mit radial nach innen ragenden Zähnen versehener Metallstreifen angeordnet ist.

15. Rohrschelle nach einem der Ansprüche 13 oder 14 in Kombination mit Anspruch 8, **dadurch gekennzeichnet, dass** auf der Innenseite (4) der Dichtungsmanschette (1) eine Bandeinlage vorgesehen ist, die sich nur im mittleren Bereich zwischen den jeweils in den axialen Endbereichen (2a, 2b) ausgebildeten Dichtlippen (5a, 5b, 6a, 6b) erstreckt.

## Claims

1. Annular sealing sleeve (1) for a pipe clamp, wherein the sealing sleeve (1) has, on an inner side (4), a first sealing lip (5a, 5b) having a first cross-sectional geometry and a second sealing lip (6a, 6b) having a second cross-sectional geometry, wherein the first cross-sectional geometry and the second cross-sectional geometry differ, wherein the first sealing lip (5a, 5b) has a greater extent in the axial direction than in the radial direction and the second sealing lip (6a, 6b) has an identical or smaller extent in the axial direction than in the radial direction, wherein the second cross-sectional geometry is formed tapering in the radial direction, namely in partially circular or pyramid-shaped form with a rounded or pointed head region, as a result of which the second sealing lip (6a, 6b) acts as an O-ring, **characterized in that** the first sealing lip (5a, 5b) because of its cross-sectional geometry is stiffer than the second sealing lip (6a, 6b).

2. Sealing sleeve according to Claim 1, **characterized in that** the first sealing lip (5a, 5b) is inclined inwards away from the second sealing lip (6a, 6b) in the axial direction.

3. Sealing sleeve according to Claim 1 or 2, **characterized in that** the second sealing lip (6a, 6b) is arranged axially further outwards than the first sealing lip (5a, 5b).

4. Sealing sleeve according to one of the preceding claims, **characterized in that** it has, adjacent to the second sealing lip (6a, 6b), further sealing lips (7a, 7b) having the same cross-sectional geometry as the second sealing lip (6a, 6b).

5. Sealing sleeve according to Claim 4, **characterized in that** the second sealing lip (6a, 6b) and the further sealing lips (7a, 7b) are inclined only slightly or scarcely and are more flexible in the axial direction than the first sealing lip (5a, 5b).

6. Sealing sleeve according to either of Claims 4 and 5, **characterized in that** further sealing lips (7a, 7b) arranged axially further outwards extend less far radially inwards than the first sealing lip (5a, 5b) .

7. Sealing sleeve according to one of Claims 4 to 6, **characterized in that** the first sealing lip (5a, 5b) and the second sealing lip (6a, 6b) extend further radially inwards than at least one of the further sealing lips (7a, 7b).

8. Sealing sleeve according to one of the preceding claims, **characterized in that** it is constructed symmetrically, with a combination of a first sealing lip (5a, 5b) and a second sealing lip (6a, 6b) and optionally further sealing lips (7a, 7b) being arranged at each axial end region (2a, 2b).

9. Sealing sleeve according to Claim 8, **characterized in that** the first sealing lips (5a, 5b) lie axially further inwards than the second sealing lips (6a, 6b) and optionally further sealing lips (7a, 7b).

10. Sealing sleeve according to either of Claims 8 and 9, **characterized in that** the sealing sleeve (1) has a central region (3) of constant material thickness between the first sealing lips (5a, 5b), wherein the sealing sleeve (1) is thinner in this central region (3) than in the region of the sealing lips (5a, 5b, 6a, 6b, 7a, 7b).

11. Sealing sleeve according to one of the preceding claims, **characterized in that** a radial outer side (8) of the sealing sleeve (1) is smooth.

12. Sealing sleeve according to one of the preceding claims, **characterized in that** axial outer edges (9a, 9b) of the sealing sleeve (1) taper in the radial direction.

13. Pipe clamp having a sealing sleeve (1) according to one of the preceding claims, **characterized in that** the sealing sleeve (1) is arranged on an inner side of the pipe clamp.

14. Pipe clamp according to Claim 13, **characterized in that** at least one metal strip having radially inwardly protruding teeth is arranged on the inner side of the pipe clamp.

15. Pipe clamp according to either of Claims 13 and 14 in combination with Claim 8, **characterized in that** a band insert is provided on the inner side (4) of the sealing sleeve (1), the band insert extending only in the central region between the sealing lips (5a, 5b, 6a, 6b) formed in each case in the axial end regions (2a, 2b).

## Revendications

1. Manchon d'étanchéité annulaire (1) pour un collier de serrage, le manchon d'étanchéité (1) présentant sur un côté intérieur (4) une première lèvre d'étanchéité (5a, 5b) avec une première géométrie de section transversale et une deuxième lèvre d'étanchéité (6a, 6b) avec une deuxième géométrie de section transversale, la première géométrie de section transversale et la deuxième géométrie de section transversale étant différentes, la première lèvre d'étanchéité (5a, 5b) présentant une extension plus grande dans la direction axiale que dans la direction radiale et la deuxième lèvre d'étanchéité (6a, 5b) présentant une extension dans la direction axiale égale ou inférieure à celle dans la direction radiale, la deuxième géométrie de section transversale étant réalisée en se rétrécissant dans la direction radiale, à savoir en forme de cercle partiel ou en forme de pyramide avec une zone de tête arrondie ou pointue, moyennant quoi la deuxième lèvre d'étanchéité (6a, 6b) agit comme un joint torique, **caractérisé en ce que** la première lèvre d'étanchéité (5a, 5b) est plus rigide que la deuxième lèvre d'étanchéité (6a, 6b) en raison de sa géométrie de section transversale.

2. Manchon d'étanchéité selon la revendication 1, **caractérisé en ce que** la première lèvre d'étanchéité (5a, 5b) est inclinée vers l'intérieur dans la direction axiale en s'éloignant de la deuxième lèvre d'étanchéité (6a, 6b).

3. Manchon d'étanchéité selon la revendication 1 ou 2, **caractérisé en ce que** la deuxième lèvre d'étanchéité (6a, 6b) est agencée axialement plus à l'extérieur que la première lèvre d'étanchéité (5a, 5b).

4. Manchon d'étanchéité selon l'une quelconque des revendications précédentes, **caractérisé en ce qu'**il présente, au voisinage de la deuxième lèvre d'étanchéité (6a, 6b), d'autres lèvres d'étanchéité (7a, 7b) ayant la même géométrie de section transversale que la deuxième lèvre d'étanchéité (6a, 6b).

5. Manchon d'étanchéité selon la revendication 4, **caractérisé en ce que** la deuxième lèvre d'étanchéité (6a, 6b) et les autres lèvres d'étanchéité (7a, 7b) sont peu ou pas du tout inclinées et sont plus flexibles dans la direction axiale que la première lèvre d'étanchéité (5a, 5b) .

6. Manchon d'étanchéité selon l'une quelconque des revendications 4 ou 5, **caractérisé en ce que** d'autres lèvres d'étanchéité (7a, 7b) agencées axialement plus à l'extérieur s'étendent radialement moins loin vers l'intérieur que la première lèvre d'étanchéité (5a, 5b).

7. Manchon d'étanchéité selon l'une quelconque des revendications 4 à 6, **caractérisé en ce que** la première lèvre d'étanchéité (5a, 5b) et la deuxième lèvre d'étanchéité (6a, 6b) s'étendent radialement plus loin vers l'intérieur qu'au moins une des autres lèvres d'étanchéité (7a, 7b).

8. Manchon d'étanchéité selon l'une quelconque des revendications précédentes, **caractérisé en ce qu'**il est construit de manière symétrique, une combinaison d'une première lèvre d'étanchéité (5a, 5b) et d'une deuxième lèvre d'étanchéité (6a, 6b) et éventuellement d'autres lèvres d'étanchéité (7a, 7b) étant agencée à chaque zone d'extrémité axiale (2a, 2b).

9. Manchon d'étanchéité selon la revendication 8, **caractérisé en ce que** les premières lèvres d'étanchéité (5a, 5b) sont situées axialement plus à l'intérieur que les deuxièmes lèvres d'étanchéité (6a, 6b) et éventuellement d'autres lèvres d'étanchéité (7a, 7b).

10. Manchon d'étanchéité selon l'une quelconque des revendications 8 ou 9, **caractérisé en ce que** le manchon d'étanchéité (1) présente entre les premières lèvres d'étanchéité (5a, 5b) une zone centrale (3) d'épaisseur de matériau constante, le manchon d'étanchéité (1) étant plus mince dans cette zone centrale (3) que dans la zone des lèvres d'étanchéité (5a, 5b, 6a, 6b, 7a, 7b).

11. Manchon d'étanchéité selon l'une quelconque des revendications précédentes, **caractérisé en ce qu'**un côté extérieur radial (8) du manchon d'étanchéité (1) est réalisé sous forme lisse.

12. Manchon d'étanchéité selon l'une quelconque des revendications précédentes, **caractérisé en ce que** les bords extérieurs axiaux (9a, 9b) du manchon d'étanchéité (1) se rétrécissent dans la direction radiale.

13. **Collier de serrage** avec un manchon d'étanchéité (1) selon l'une quelconque des revendications précédentes, **caractérisé en ce que** le manchon d'étanchéité (1) est agencé sur un côté intérieur du collier de serrage.

14. Collier de serrage selon la revendication 13, **caractérisé en ce qu'**au moins une bande métallique pourvue de dents faisant saillie radialement vers l'intérieur est agencée sur le côté intérieur du collier de serrage.

15. Collier de serrage selon l'une quelconque des revendications 13 ou 14 en combinaison avec la revendication 8, **caractérisé en ce que** sur le côté intérieur (4) du manchon d'étanchéité (1) est prévue une garniture de bande qui s'étend uniquement dans la zone centrale entre les lèvres d'étanchéité (5a, 5b, 6a, 6b) réalisées respectivement dans les zones d'extrémité axiales (2a, 2b).
